# FASCICULE DE BREVET EUROPEEN

(11) **EP 2 780 665 B1**
(45) Date de publication et mention de la délivrance du brevet: **12.02.2020**
(21) Numéro de dépôt: 12795517.7
(22) Date de dépôt: 12.11.2012
(51) Int. Cl.: B29C 70/24, G01B 11/24

(54) **CONCEPTION D'UNE PIECE EN MATERIAU COMPOSITE TISSE 3D**
ENTWURF FÜR EIN TEIL AUS 3D-WEBVERBUNDSTOFF
DESIGN FOR A PART MADE FROM 3D WOVEN COMPOSITE MATERIAL

(30) Priorité: 15.11.2011 FR 1160374
(43) Date de publication de la demande: 24.09.2014
(73) Titulaire: Safran Aircraft Engines, 75015 Paris (FR)
(72) Inventeur: MARCHAL, Yann, F-77550 Moissy-Cramayel Cedex (FR); MAHIEU, Jean-Noël, F-77550 Moissy-Cramayel Cedex (FR)
(74) Mandataire: Cabinet Beau de Loménie
(86) Numéro de dépôt international: PCT/FR2012/052594
(87) Numéro de publication internationale: WO 2013/072606

(56) Documents cités:
- EP-A2- 2 327 538
- FR-A1- 2 892 339
- FR-A1- 2 916 529

## Description

### Arrière-plan de l'invention

La présente invention se rapporte au domaine des pièces en matériau composite tissé 3D. La présente invention concerne en particulier l'estimation de l'épaisseur d'une telle pièce lors de la conception de la pièce.

Le document FR 2 892 339 décrit la fabrication d'une aube de turbomachine composite utilisant un matériau composite tissé 3D. Les principales étapes de fabrication sont :
- On fabrique un moule dont la surface intérieure correspond à la surface extérieure de l'aube à fabriquer.
- Ensuite, on insère une préforme tissée 3D dans le moule.
- Enfin, de la résine est injectée dans le moule puis durcie.

Lors d'une étape préalable de conception assistée par ordinateur, le nombre de couches dans la préforme et la forme des sorties de couches de la préforme à insérer dans le moule sont déterminés en fonction notamment de la forme du moule. Il existe des algorithmes qui permettent de réaliser ces calculs. Ces algorithmes connus utilisent en données d'entrée un profil moyen, également appelé profil squelette, représentant la forme de la pièce à fabriquer, associé à un champ d'épaisseur représentant l'épaisseur de la pièce. Il est donc nécessaire de déterminer, à partir de la forme du moule, le profil moyen de la pièce et le champ d'épaisseur correspondant.

A cet effet, dans le cadre de la fabrication d'une pièce en matériau composite tissé 2D, le document EP 2 327 538 propose de déterminer l'épaisseur de l'aube par projection d'un point de la surface extérieure, dans un plan parallèle au pied de l'aube, selon une direction normale à la courbe définie par l'intersection du plan précité et du profil moyen de l'aube.

Toutefois, le comportement d'un matériau composite tissé 3D étant différent de celui de plis de matériau tissé 2D, on a constaté que cette manière d'estimer l'épaisseur n'est pas adaptée et peut conduire à des écarts de taux de fibres et donc à une pièce peu homogène.

Le document FR 2 916 529 décrit un procédé de métrologie optique pour mesure le contour d'une pièce. Ce document ne concerne en rien la conception d'une pièce en matériau composite tissé 3D. Un passage de ce document décrit la détermination du contour de la pièce, mais ne mentionne pas de préforme tissée 3D ni de détermination d'un nombre de couches ou de positions de sorties de couches.

### Objet et résumé de l'invention

La présente invention propose une procédé de conception d'une pièce en matériau composite tissé 3D, selon la revendication 1.

En fonction de la surface cible, la distance déterminée peut correspondre à l'épaisseur de la pièce ou à la demi-épaisseur de la pièce. Grâce à l'utilisation d'une direction de projection indiquée par des données de projection, par exemple un fichier prédéfini, l'épaisseur déterminée peut être l'épaisseur réellement vue par une colonne de chaine après mise en forme de la préforme dans le moule. Ainsi, la structure de la préforme déterminée peut prendre en compte les déformations subies par la préforme lors de sa mise en forme dans le moule. Cela conduit à une meilleure homogénéité du taux de fibres.

Les données de projection peuvent indiquer une direction de projection en fonction de la position dudit point selon un axe de hauteur de la pièce. En variante, les données de projection peuvent indiquer une direction de projection en fonction de la position dudit point selon un axe de hauteur de la pièce et selon une position selon un axe de largueur de la pièce.

La surface cible peut être un profil moyen de la pièce.

Dans un autre mode de réalisation, la surface extérieure de la pièce comprend une première face et une deuxième face opposée à la première face, ledit ensemble de points étant un ensemble de point de la première face, la surface cible étant la deuxième face.

Dans un exemple qui n'est pas un mode de réalisation de l'invention, pour au moins une autre partie des points de l'ensemble de points, lors de l'étape de détermination d'une distance, la direction de projection utilisée est une direction normale à la surface cible.

L'étape de détermination de la structure d'une préforme tissée 3D peut comprendre :
- une étape de calcul de mise à plat de la surface cible,
- une étape de détermination d'un nombre de couches et de positions de sorties de couches en fonction de la mise à plat calculée, des distances déterminées et de paramètres de tissages cibles.

Les paramètres de tissages cibles sont par exemples un taux de fibre cible, un ratio cible entre chaine/trame, une armure prédéterminée, un espacement chaine cible, un espacement trame cible, un décadrage cible et une taille des fils prédéterminée.

L'invention propose également un procédé de fabrication d'une pièce en matériau composite tissé 3D, comprenant :
- une étape de détermination de la structure d'une préforme tissée 3D selon le procédé de conception conforme à l'invention, et
- une étape de fabrication de la pièce en fonction de la structure déterminée.

Le procédé de fabrication peut comprendre :
- une étape de fabrication d'un prototype de ladite pièce, et
- une étape de mémorisation desdites données de projection en fonction de déformations observées dans ledit prototype.

L'invention concerne également un programme d'ordinateur selon la revendication 11.

Enfin, l'invention propose aussi un dispositif de conception d'une pièce en matériau composite tissé 3D, selon la revendication 12.

Les modes particuliers de réalisation de l'invention sont définis dans les revendications dépendantes.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente les principales étapes d'un procédé de fabrication d'une pièce en matériau composite tissé 3D, selon un mode de réalisation de l'invention,
- la figure 2 représente les principales étapes de l'étape de détermination d'une préforme de la figure 1,
- la figure 3 est une vue en perspective d'une aube qui illustre la projection d'un point selon une direction de projection qui dépend de la hauteur,
- la figure 4 est une vue en coupe de l'aube de la figure 3 et illustre la projection d'un point selon une direction de projection qui dépend de la hauteur ou une direction normale, et
- la figure 5 représente l'architecture matérielle d'un ordinateur permettant la mise en œuvre des étapes de la figure 2.

### Description détaillée d'un mode de réalisation

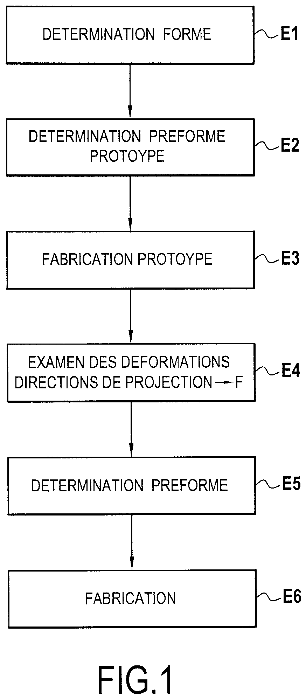

La **figure 1** représente les principales étapes d'un procédé de fabrication d'une pièce en matériau composite tissé 3D. Dans la suite de la description, la pièce est une aube de soufflante pour turbomachine. Bien entendu, la présente invention s'applique à toute autre pièce réalisée en matériau composite tissé 3D.

Le procédé débute à l'étape E1 au cours de laquelle la forme de l'aube est déterminée. Typiquement, le concepteur de la pièce représente la forme de la surface extérieure de l'aube en utilisant un logiciel de conception assistée par ordinateur. La forme de la surface extérieure de l'aube est alors enregistrée dans un fichier appelé FORME.

Ensuite, à l'étape E2, on détermine la structure d'une préforme tissée 3D correspondant à la forme de l'étape E1. L'homme du métier connait des méthodes et des logiciels permettant de déterminer la structure d'une telle préforme et cette étape n'est donc pas décrite en détail. Dans un mode de réalisation, l'étape E2 comprend notamment la détermination d'un profil moyen de la pièce et d'un champ d'épaisseur correspondant, et la détermination des sorties de couches de la préforme en fonction du profil moyen et du champ d'épaisseur déterminé. Le document EP 2 327 538 cité en introduction donne un exemple de détermination d'un champ d'épaisseur qui peut être utilisée à cette étape.

Par exemple, la position des sorties de couches est déterminée de la manière suivante :
- A partir du profil moyen, un calcul de mise à plat est réalisé. En effet, comme le profil moyen provient de la forme en 3D de la pièce et que le tissage est réalisé sur une préforme à plat, c'est-à-dire en 2D, il faut déterminer la forme à plat correspondant à la forme 3D.
- Ensuite, le champ d'épaisseur déterminé est reporté sur la forme à plat.
- Le nombre de couches et la position des sorties de couches sont déterminés en fonction de ce champ d'épaisseur sur la forme à plat, d'un taux de fibre cible et d'un ratio cible entre chaine/trame. En effet, le taux de fibre est fonction du nombre de couches, de l'armure, de l'espacement chaine, de l'espacement trame, du décadrage et de la taille des fils. Comme les autres paramètres sont fixés, il reste à ajuster le nombre de couches pour obtenir le taux de fibre souhaité.

Un prototype d'aube est alors fabriqué à l'étape E3, en utilisant la structure de la préforme déterminée à l'étape E2. Typiquement, l'étape E3 comprend la réalisation d'un moule correspondant à la forme de l'étape E1, le tissage 3D de la préforme déterminée à l'étape E2, l'insertion de la préforme dans le moule, l'injection de résine dans le moule et le durcissement de la résine. D'autres méthodes de fabrication peuvent être utilisées.

Ensuite, à l'étape E4, les déformations des fibres tissées du prototype d'aube de l'étape E3 sont observées. On peut par exemple découper le prototype ou observer la déformation des fibres par tomographie.

Les inventeurs ont constaté que la déformation du tissu lors de sa mise en forme varie en fonction de la hauteur dans l'aube. Ainsi, dans le prototype, l'épaisseur vue par une colonne de chaine correspond à l'épaisseur vue dans une direction résultant de ces déformations variables, et n'est pas nécessairement égale à l'épaisseur prise en compte lors de la détermination de la préforme à l'étape E2. Le taux de fibres n'est donc pas constant et l'aube n'est pas homogène, ce qui est indésirable.

Ainsi, à l'étape E4, on choisit des directions de projection différentes pour différentes hauteurs de l'aube, en fonction des directions des déformations observées. Les directions de projection choisies sont mémorisées dans un fichier F.

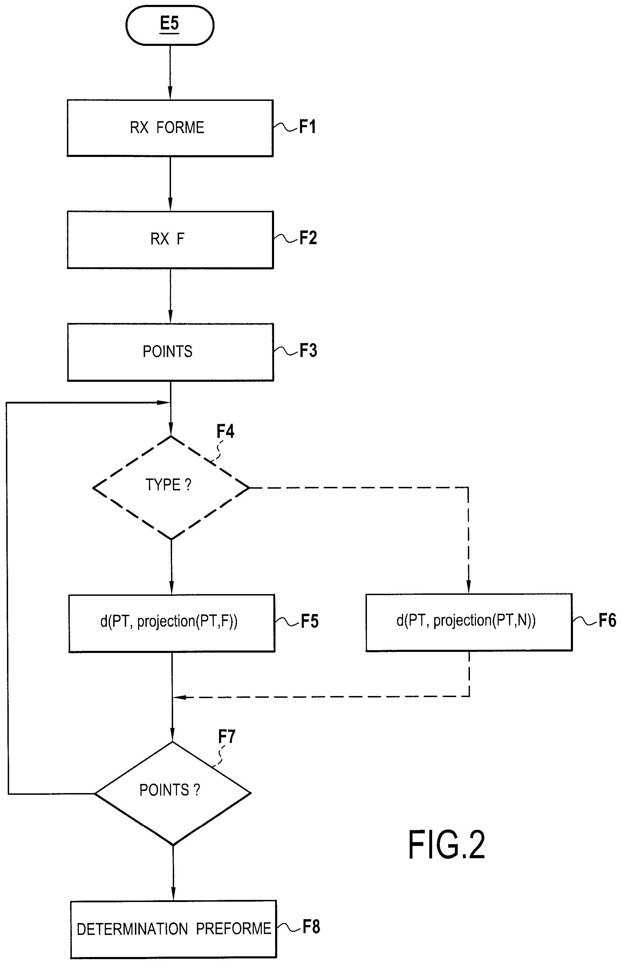

Ensuite, à l'étape E5, on détermine la structure d'une préforme pour matériau composite tissé 3D en fonction de la forme de l'étape E1 et des directions de projection choisies à l'étape E4. L'étape E5 correspond à procédé de conception de la pièce au sens de l'invention, et sera décrite en détail en référence à la figure 2.

Enfin, une aube (ou une série d'aubes) est fabriquée à l'étape E6, en utilisant la structure de la préforme déterminée à l'étape E5. Comme pour l'étape E3, l'étape E6 comprend typiquement le tissage 3D de la préforme déterminée à l'étape E5, l'insertion de la préforme dans le moule, l'injection de résine dans le moule et le durcissement de la résine. D'autres méthodes de fabrications peuvent être utilisées.

On décrit maintenant plus en détail le déroulement de l'étape E5, en référence à la **figure 2****.**

A l'étape F1, on obtient le fichier FORME mentionné précédemment en référence à l'étape E2. A l'étape F2, on obtient le fichier F mentionné précédemment en référence à l'étape E4.

Ensuite, à l'étape F3, on choisit un ensemble de points à la surface de l'aube, par exemple répartis selon un pas constant.

A l'étape F5, on détermine la distance d entre un point PT de l'étape F3 et la projection de ce point sur une surface cible, selon une direction prédéterminée.

Dans un mode de réalisation, la surface cible est le profil moyen de l'aube, également appelé profil squelette. Le profil moyen est par exemple défini comme la surface définie par les centres des cercles inscrits dans le volume de l'aube, ou par les points à mi-distance entre deux faces opposées de l'aube selon une direction prédéterminée.

Dans un autre mode de réalisation, les points de l'étape F3 sont choisis sur une face de l'aube, par exemple l'intrados, et la surface cible est la face opposée, par exemple l'extrados.

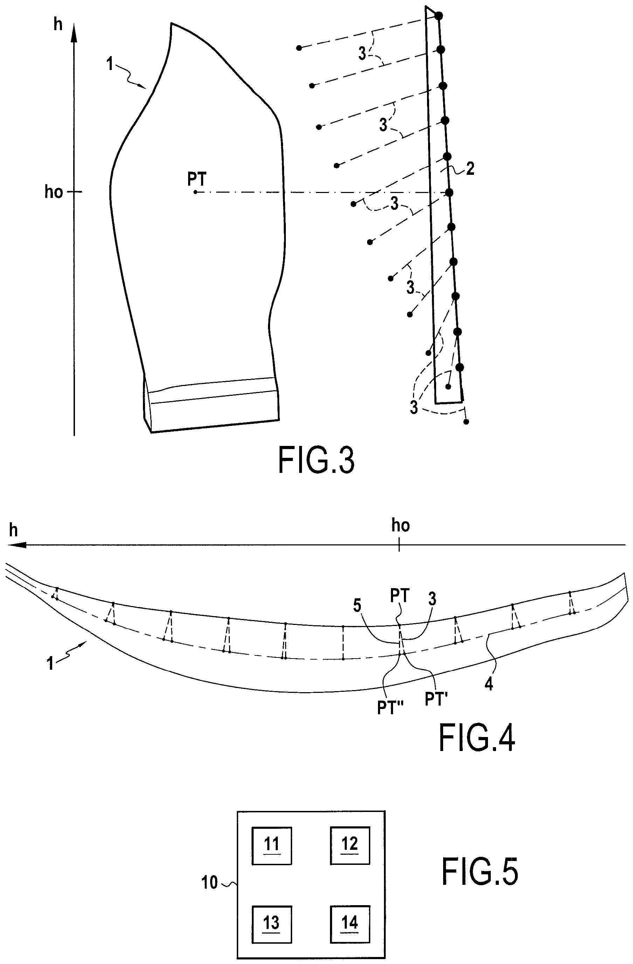

Le point PT est projeté à l'étape F5 selon une direction de projection indiquée par le fichier F. Ceci est illustré plus en détail aux figures 3 et 4.

La **figure 3** représente une aube 1 vue en perspective, et une surface 2. La surface 2 est une illustration graphique du contenu du fichier F. Ainsi, la surface 2 peut être vue comme une bande rectangulaire torsadée qui s'étend parallèlement à l'axe de hauteur h de l'aube 1. Pour chaque hauteur h, la direction normale 3 à la surface 2 représente la direction de projection correspondant à cette hauteur.

Ainsi, un point PT situé à une hauteur h₀ est projeté, à l'étape F5, selon la direction de projection 3 correspondante indiquée par la surface 2.

La **figure 4** est une vue en coupe de l'aube 1, sur laquelle on a représenté le profil moyen 4 de l'aube 1. Le point PT de hauteur h₀, situé sur l'intrados de l'aube 1, est projeté sur le profil moyen 4 selon la direction de projection 3 indiquée par la surface 2. La projection du point PT selon cette direction est noté PT'.

La distance d entre les points PT et PT' est représentative de la demi-épaisseur de l'aube 1, dans la direction 3.

Dans un mode de réalisation, tous les points choisis à l'étape F3 sont projetés comme expliqué ci-dessus.

Dans un autre mode de réalisation, correspondant aux étapes représentées en traits interrompus sur la figure 2, certains points sont projetés comme expliqué ci-dessus et d'autre points sont projetés selon une direction normale à la surface cible (au profile moyen 4 dans l'exemple de la figure 4).

Ainsi, dans ce mode de réalisation, après l'étape F3 et avant l'étape F5, on détermine à l'étape F4 si le point PT est du type devant être projeté selon une direction normale ou selon une direction indiquée dans le fichier F. Le type du point PT est par exemple déterminé en fonction de données contenues dans le fichier F. Par exemple, le fichier F contient, en plus de la définition de la surface 2, une liste d'intervalles de hauteur et, pour chaque intervalle, l'indication d'un type de point.

En fonction du type de point déterminé à l'étape F4, le point PT fait l'objection d'une projection à l'étape F5 comme décrit précédemment, ou d'une projection normale à l'étape F6.

La projection normale de l'étape F6 est illustrée sur la figure 4. Le point PT est projeté sur le profil moyen 4 selon une direction 5 normale au profile moyen 4. La projection du point PT selon la direction 5 est noté PT".

La distance d entre les points PT et PT" est représentative de la demi-épaisseur de l'aube 1, dans la direction 5.

L'étape F5 (ou les étapes F4, F5, F6) est répétée pour tous les points de l'étape F3. Si à l'étape F7 on détermine que l'étape F5 (ou les étapes F4, F5, F6) a été effectuée pour tous les points de l'étape F3, alors on passe à l'étape F8.

Enfin, à l'étape F8, on détermine la structure d'une préforme pour matériau composite tissé 3D correspondant à la forme du fichier FORME, en tenant compte du champ d'épaisseurs représenté par les distances d déterminées.

Les étapes de la figure 2 correspondent à un procédé de conception de l'aube 1 mis en œuvre par un ordinateur. Dans ce cas, les étapes de la figure 2 correspondent à l'exécution d'un programme d'ordinateur. La **figure 5** représente l'architecture matérielle d'un ordinateur 10 permettant la mise en œuvre des étapes de la figure 2.

L'ordinateur 10 comprend un processeur 11, une mémoire non-volatile 12, une mémoire volatile 13 et une interface utilisateur 14. Le processeur 10 permet d'exécuter des programmes mémorisés dans la mémoire non-volatile 12 en utilisant la mémoire volatile 13. L'interface utilisateur 14 permet à un utilisateur d'introduire des données dans l'ordinateur 10, notamment les données du fichier FORME et du fichier F précités. Un programme d'ordinateur comprenant des instructions pour l'exécution des étapes F1 à F8 est mémorisé dans la mémoire non-volatile 12.

Dans le mode de réalisation décrit ci-dessus, le fichier F indique une direction de projection en fonction de la hauteur h d'un point à la surface de la pièce. Dans une variante, la direction de projection peut aussi varier en fonction de la position en largueur du point dans la pièce. Ainsi, de manière générale, le fichier F indique une direction de projection en fonction de la position d'un point.

## Revendications

1. Procédé de conception d'une pièce (1) en matériau composite tissé 3D, mis en œuvre par ordinateur (10), le procédé comprenant la détermination de la structure d'une préforme tissée 3D dans une étape (E5) consistant à :
- l'obtention (F1) de données de forme (FORME) représentant la surface extérieure de la pièce (1),
- l'obtention (F2) de données de projection (F) indiquant une direction de projection (3, 5) en fonction d'une direction de déformation de fibres d'un prototype de la pièce,
- la sélection (F3) d'un ensemble de points de la surface extérieure,
- pour chaque point (PT) dudit ensemble de points de la surface extérieure, détermination (F5, F6) d'une distance (d) entre ledit point et la projection dudit point (PT', PT") sur une surface cible (4), selon ladite direction de projection prédéterminée, et
- la détermination (F8) de la structure d'une préforme tissée 3D en fonction des distances (d) déterminées,
**caractérisé en ce que**, pour au moins une partie des points (PT) de l'ensemble de points, lors de l'étape (F5) de détermination d'une distance, la direction de projection (3) utilisée est déterminée en fonction desdites données de projection (F) et de la position dudit point.

2. Procédé de conception selon la revendication 1, dans lequel les données de projection (F) indiquent une direction de projection en fonction de la position dudit point selon un axe de hauteur (h) de la pièce.

3. Procédé de conception selon la revendication 1, dans lequel les données de projection (F) indiquent une direction de projection en fonction de la position dudit point selon un axe de hauteur (h) de la pièce et selon une position selon un axe de largueur de la pièce.

4. Procédé de conception selon l'une des revendications 1 à 3, dans lequel la surface cible (4) est un profil moyen de la pièce.

5. Procédé de conception selon l'une des revendications 1 à 3, dans lequel la surface extérieure de la pièce comprend une première face et une deuxième face opposée à la première face, ledit ensemble de points étant un ensemble de point de la première face, la surface cible étant la deuxième face.

6. Procédé de conception selon la revendication 5, dans lequel la première face est la face intrados d'une aube et la surface cible la face extrados de l'aube.

7. Procédé de conception selon l'une des revendications 1 à 6, dans lequel ladite étape (F8) de détermination de la structure d'une préforme tissée 3D comprend :
- une étape de calcul de mise à plat de la surface cible,
- une étape de détermination d'un nombre de couches et de positions de sorties de couches en fonction de la mise à plat calculée, des distances (d) déterminées et de paramètres de tissages cibles.

8. Procédé de fabrication d'une pièce en matériau composite tissé 3D, comprenant :
- ladite étape (E5) de détermination de la structure d'une préforme tissée 3D selon le procédé de conception de l'une des revendications 1 à 7, et
- une étape (E6) de fabrication de la pièce en fonction de la structure déterminée.

9. Procédé de fabrication selon la revendication 8, dans lequel l'étape (E6) de fabrication de la pièce en fonction de la structure déterminée comprend :
- une étape de tissage d'une préforme en fonction de la structure déterminée,
- une étape d'insertion de la préforme dans un moule, et
- une étape d'injection de résine dans le moule.

10. Procédé de fabrication selon la revendication 8 ou la revendication 9, comprenant :
- une étape (E3) de fabrication d'un prototype de ladite pièce (1), et
- une étape (E4) de mémorisation desdites données de projection en fonction de déformations observées dans ledit prototype.

11. Programme d'ordinateur comprenant des instructions pour l'exécution d'un procédé de conception selon l'une des revendications 1 à 7 lorsque ledit programme est exécuté par un ordinateur.

12. Dispositif de conception d'une pièce (1) en matériau composite tissé 3D, comprenant un ordinateur (10) et comprenant la détermination dans l'ordinateur (10) de la structure d'une préforme tissée 3D par:
- des moyens (14) d'obtention de données de forme (FORME) représentant la surface extérieure de la pièce (1),
- des moyens (14) d'obtention de données de projection (F) indiquant une direction de projection (3, 5) en fonction d'une direction de déformation de fibres d'un prototype de la pièce (1),
- des moyens (11, 12, 13) de sélection d'un ensemble de points de la surface extérieure,
- des moyens (11, 12, 13) de détermination, pour chaque point (PT) dudit ensemble de points de la surface extérieure, d'une distance (d) entre ledit point et la projection dudit point (PT', PT") sur une surface cible (4), selon ladite direction de projection prédéterminée, et
- des moyens (11, 12, 13) de détermination de la structure d'une préforme tissée 3D en fonction des distances (d) déterminées,
**caractérisé en ce que**, pour au moins une partie des points (PT) de l'ensemble de points, les moyens (11, 12, 13) de détermination d'une distance sont configurés pour utiliser comme direction de projection (3) une direction déterminée en fonction desdites données de projection (F) et de la position dudit point.

## Patentansprüche

1. Verfahren zum Entwerfen eines Teils (1) aus 3D-gewebtem Verbundwerkstoff, das mittels Computer (10) durchgeführt wird, wobei das Verfahren das Bestimmen der Struktur eines 3D-gewebten Vorformlings in einem Schritt (E5) umfasst, bestehend im:
- Erhalten (F1) von Formdaten (FORME), die die Außenfläche des Teils (1) darstellen,
- Erhalten (F2) von Projektionsdaten (F), die eine Projektionsrichtung (3, 5) in Abhängigkeit von einer Richtung einer Verformung von Fasern eines Prototyps des Teils angeben,
- Auswählen (F3) einer Menge von Punkten der Außenfläche,
- für jeden Punkt (PT) der Menge von Punkten der Außenfläche, Bestimmen (F5, F6) eines Abstands (d) zwischen dem Punkt und der Projektion des Punktes (PT', PT") auf eine Zielfläche (4) in der vorbestimmten Projektionsrichtung, und
- Bestimmen (F8) der Struktur eines 3D-gewebten Vorformlings in Abhängigkeit von den bestimmten Abständen (d),
**dadurch gekennzeichnet, dass** für wenigstens einen Teil der Punkte (PT) der Menge von Punkten, während des Schrittes (F5) des Bestimmens eines Abstands die verwendete Projektionsrichtung (3) in Abhängigkeit von den Projektionsdaten (F) und von der Position des Punktes bestimmt wird.

2. Entwurfsverfahren nach Anspruch 1, bei dem die Projektionsdaten (F) eine Projektionsrichtung in Abhängigkeit von der Position des Punktes entlang einer Höhenachse (h) des Teils angeben.

3. Entwurfsverfahren nach Anspruch 1, bei dem die Projektionsdaten (F) eine Projektionsrichtung in Abhängigkeit von der Position des Punktes entlang einer Höhenachse (h) des Teils und entsprechend einer Position entlang einer Breitenachse des Teils angeben.

4. Entwurfsverfahren nach einem der Ansprüche 1 bis 3, bei dem die Zielfläche (4) ein durchschnittliches Profil des Teils ist.

5. Entwurfsverfahren nach einem der Ansprüche 1 bis 3, bei dem die Außenfläche des Teils eine erste Seite und eine der ersten Seite gegenüberliegende zweite Seite umfasst, wobei die Menge von Punkten eine Menge von Punkten der ersten Seite ist, wobei die Zielfläche die zweite Seite ist.

6. Entwurfsverfahren nach Anspruch 5, bei dem die erste Seite die Vorderseitenfläche einer Schaufel und die Zielfläche die Rückseitenfläche der Schaufel ist.

7. Entwurfsverfahren nach einem der Ansprüche 1 bis 6, bei dem der Schritt (F8) des Bestimmens der Struktur eines 3D-gewebten Vorformlings umfasst:
- einen Schritt des Berechnens des Flachliegens der Zielfläche,
- einen Schritt des Bestimmens einer Anzahl von Schichten und von Schichtaustrittspositionen in Abhängigkeit von dem berechneten Flachliegen, den bestimmten Abständen (d) und von Zielwebparametern.

8. Verfahren zum Herstellen eines Teils aus 3D-gewebtem Verbundwerkstoff, umfassend:
- den Schritt (E5) des Bestimmens der Struktur eines 3D-gewebten Vorformlings entsprechend dem Entwurfsverfahren von einem der Ansprüche 1 bis 7, und
- einen Schritt (E6) des Herstellens des Teils in Abhängigkeit von der bestimmten Struktur.

9. Herstellungsverfahren nach Anspruch 8, bei dem der Schritt (E6) des Herstellens des Teils in Abhängigkeit von der bestimmten Struktur umfasst:
- einen Schritt des Webens eines Vorformlings in Abhängigkeit von der bestimmten Struktur,
- einen Schritt des Einfügens des Vorformlings in eine Form, und
- einen Schritt des Einspritzens von Harz in die Form.

10. Herstellungsverfahren nach Anspruch 8 oder Anspruch 9, umfassend:
- einen Schritt (E3) des Herstellens eines Prototyps des Teils (1), und
- einen Schritt (E4) des Speicherns der Projektionsdaten in Abhängigkeit von bei dem Prototypen beobachteten Verformungen.

11. Computerprogramm, umfassend Befehle für die Durchführung eines Entwurfsverfahrens nach einem der Ansprüche 1 bis 7, wenn das Programm durch einen Computer ausgeführt wird.

12. Vorrichtung zum Entwerfen eines Teils (1) aus 3D-gewebtem Verbundwerkstoff, umfassend einen Computer (10) und umfassend das Bestimmen der Struktur eines 3D-gwebten Vorformlings in dem Computer (10) durch:
- Mittel (14) zum Erhalten von Formdaten (FORME), die die Außenfläche des Teils (1) darstellen,
- Mittel (14) zum Erhalten von Projektionsdaten (F), die eine Projektionsrichtung (3, 5) in Abhängigkeit von einer Richtung einer Verformung von Fasern eines Prototyps des Teils (1) angeben,
- Mittel (11, 12, 13) zum Auswählen einer Menge von Punkten der Außenfläche,
- Mittel (11, 12, 13), um für jeden Punkt (PT) der Menge von Punkten der Außenfläche einen Abstand (d) zwischen dem Punkt und der Projektion des Punktes (PT', PT") auf eine Zielfläche (4) in der vorbestimmten Projektionsrichtung zu bestimmen, und
- Mittel (11, 12, 13) zum Bestimmen der Struktur eines 3D-gewebten Vorformlings in Abhängigkeit von den bestimmten Abständen (d),
**dadurch gekennzeichnet, dass** für wenigstens einen Teil der Punkte (PT) der Menge von Punkten, die Mittel (11, 12, 13) zum Bestimmen eines Abstandes dazu ausgelegt sind, als Projektionsrichtung (3) eine Richtung zu verwenden, die in Abhängigkeit von den Projektionsdaten (F) und von der Position des Punktes bestimmt wird.

## Claims

1. A method of designing a part (1) made of 3D woven composite material, the method being performed by a computer (10) and comprising determining the structure of a 3D woven preform in a step (E5) consisting of:
▪ obtaining (F1) shape data (SHAPE) representing the outside surface of the part (1);
▪ obtaining (F2) projection data (F) specifying a projection direction (3, 5) as a function of a fiber deformation direction of a prototype of the part (1);
▪ selecting (F3) a set of points of the outside surface;
▪ for each point (PT) of said set of points of the outside surface, determining (F5, F6) a distance (d) between said point and the projection of said point (PT', PT") onto a target surface (4), the projection being along said predetermined projection direction; and
▪ determining (F8) the structure of a 3D woven preform as a function of the determined distances (d);
the method being **characterized in that** the projection direction (3) that is used for at least some of the points (PT) of the set of points is determined during the step (F5) of determining a distance, as a function of said projection (F) and as a function of the position of said point.

2. A design method according to claim 1, wherein the projection data (F) specify a projection direction as a function of the position of said point along a height axis (h) of the part.

3. A design method according to claim 1, wherein the projection data (F) specify a projection direction as a function of the position of said point along a height axis (h) of the part and depending on a position along a width axis of the part.

4. A design method according to any one of claims 1 to 3, wherein the target surface (4) is a mean profile of the part.

5. A design method according to any one of claims 1 to 3, wherein the outside surface of the part has a first face and a second face opposite to the first face, said set of points being a set of points of the first face and the target surface being the second face.

6. A design method according to claim 5, wherein the first face is the intrados of the blade and the target surface is the extrados of the blade.

7. A design method according to any one of claims 1 to 6, wherein said step (F8) of determining the structure of a 3D woven preform comprises:
▪ a step of calculating the target surface laid flat; and
▪ a step of determining a number of layers and exit positions for layers as a function of the calculated flat surface, as a function of the determined distances (d), and as a function of target weaving parameters.

8. A method of fabricating a part out of 3D woven composite material, the method comprising:
▪ the step (E5) of determining the structure of a 3D woven preform using the design method according to any one of claims 1 to 7; and
▪a step (E6) of fabricating the part as a function of the determined structure.

9. A fabrication method according to claim 8, wherein the step (E6) of fabricating the part as a function of the determined structure comprises:
▪ a step of weaving a preform as a function of the determined structure;
▪ a step of inserting the preform in a mold; and
▪ a step of injecting resin into the mold.

10. A fabrication method according to claim 8 or claim 9, the method comprising:
▪ a step (E3) of fabricating a prototype of said part (1); and
▪ a step (E4) of storing said projection data as a function of deformations observed in said prototype.

11. A computer program including instructions for executing a design method according to any one of claims 1 to 7 when said program is executed by a computer.

12. A device for designing a part (1) made out of 3D woven composite material, the device comprising a computer (10) and comprising determining the structure of a 3D woven preform in the computer (10) by:
▪ means (14) for obtaining shape data (SHAPE) representing the outside surface of the part (1);
▪ means (14) for obtaining projection data (F) specifying a projection direction (3, 5) as a function of a fiber deformation direction of a prototype of the part (1) ;
▪ means (11, 12, 13) for selecting a set of points on the outside surface;
▪ means (11, 12, 13) for determining, for each point (PT) in said set of points on the outside surface, a distance (d) between said point and the projection of said point (PT', PT") onto a target surface (4), the projection being along said predetermined projection direction; and
▪ means (11, 12, 13) for determining the structure of a 3D woven preform as a function of the determined distances (d);
the device being **characterized in that** the means (11, 12, 13) for determining a distance are configured to use as the projection direction (3) for at least some of the points (PT) of the set of points, a direction that is determined as a function of said projection data (F) and as a function of the position of said point.
